## Europäisches Patentamt
## European Patent Office
## Office européen des brevets

(19)

(11) Veröffentlichungsnummer: **0 070 479**
**B1**

(12) **EUROPÄISCHE PATENTSCHRIFT**

(45) Veröffentlichungstag der Patentschrift:
15.01.86

(51) Int. Cl.⁴: **B 24 B 27/06, B 24 B 57/00**

(21) Anmeldenummer: **82106180.1**

(22) Anmeldetag: **12.07.82**

(54) Verfahren zum Schleifen oder Trennen eines Werkstückes.

(30) Priorität: **20.07.81 AT 3190/81**

(43) Veröffentlichungstag der Anmeldung:
**26.01.83 Patentblatt 83/4**

(45) Bekanntmachung des Hinweises auf die Patenterteilung:
**15.01.86 Patentblatt 86/3**

(84) Benannte Vertragsstaaten:
**DE FR GB IT NL SE**

(56) Entgegenhaltungen:
**DE-C-252 251**
**US-A-1 970 545**
**US-A-3 241 265**
**US-A-3 592 618**
**US-A-3 990 192**

(73) Patentinhaber: **Tyrolit Schleifmittelwerke Swarovski KG, Swarovskistrasse 33, A-6130 Schwaz (AT)**

(72) Erfinder: **Huber, Johann, Nr. 373, A-6233 Kramsach (AT)**
Erfinder: **Thanner, Otto, Innsbruckerstrasse 45, A-6130 Schwaz (AT)**

(74) Vertreter: **Hofinger, Engelbert, Torggler- Hofinger Wilhelm- Greil- Strasse 16, A-6020 Innsbruck (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren zum Bearbeiten von Werkstücken, wobei eine Relativbewegung zwischen dem Werkstück und einem Schleifkörper, bestehend auf Schleifkorn, Bindemittel und fallweise Füllstoffen stattfindet, und wobei während des Bearbeitens ein aus schleifaktiven Stoffen gebildeter oder schleifaktiven Füllstoff enthaltender, bei Temperaturen zwischen 1°C und 200°C fester Körper an den Schleifkörper im Bereich seiner Arbeitsfläche herangebracht wird.

Die Erfindung bezieht sich weiterhin auf eine Vorrichtung zur Durchführung des genannten Verfahrens.

Im allgemeinen setzen sich Schleifkörper aus drei Komponenten zusammen. Einmal das schneidende Schleifkorn, das beispielsweise vom Korund oder Siliciumkarbid gebildet wird, dem Bindemittel, das ein Harz, aber auch eine keramische Masse sein kann und Füllstoff.

Die vorliegende Erfindung befaßt sich ausschließlich mit den schleifaktiven "Füllstoffen". Die Wirkungen der schleifaktiven Füllstoffe lassen sich im allgemeinen in folgende drei Hauptgruppen unterteilen:

1. Herabsetzung der Reibung zwischen Schleifkorn, Werkstück und Spänen, d. h. die Füllstoffe bzw. ihre Folgeprodukte müssen als Hochtemperatur- und Hochdruckschmiermittel wirken. Sie können dabei einen primären Schmierfilm in Form eines Schmelzfilmes (z. B. Kryolith) oder eines Festoffschmierfilmes (Graphit, Molybdänsulfid, Bleioxid) bilden. Es können aber auch sekundäre Filme entstehen: Metallchlorid (-sulfid) als Füllstoff → Chlor-(Schwefel-) -abspaltung → Metallchlorid (-sulfid) des geschliffenen Werkstoffes.

2. Schutzwirkungen durch Bilden von primären bzw. sekundären Oberflächenfilmen auf Korn, Werkstück und Spänen (analog Punkt 1). Dadurch werden Kornzerstörung durch Diffusionsvorgänge (z. B. Spinellbildung beim Schleifen von Eisenwerkstoffen mit Korund), Aufbauschneiden am Korn und Wiederaufschweißeffekte (Späne und Werkstoff) vermieden.

3. Kühleffekte im Mikrobereich durch hohe Schmelz-, Verdampfungs-und Umwandlungswärmen und temperaturmäßig günstig gelegene thermische Umwandlungspunkte.

Als besonders schleifaktiv haben sich beispielsweise Halogenide (z. B. Bleichlorid, Flußspat, Kryolith etc.), Chalkogenide (z. B. Pyrith, Antimonsulfide, Zinksulfid, Molybdänsulfid, Selenide, Telluride, etc.), niedrigschmelzende Metalle (z. B. Blei, Zinn, niedrigschmelzende Mischmetalle), Hochdruckschmiermittel (z. B. Graphit) erwiesen. Als beste Füllstoffe in der Praxis bezüglich Scheibenstandzeit und niedriger Schleiftemperatur ("kühler Schliff") haben sich Bleichlorid und Antimontrisulfid erwiesen.

Es zeigt sich, daß ein Füllstoff umso schleifaktiver ist, je niedriger seine Umwandlungstemperaturen (Schmelz-, Siede-, Sublimations-, Zersetzungspunkt) liegen. Selbstverständlich sind diese Temperaturen nach unten durch die Verarbeitungsbedingungen beim Herstellen der Schleifkörper begrenzt. Zudem sollen bei der Zersetzung beim Schleifprozeß chemisch hochaktive Elemente bzw. Verbindungen frei werden, z. B. elementares Chlor, Chlorwasserstoff, Schwefel, Schwefeldioxid etc.

Das Problem der schleifaktiven Füllstoffe ist darin zu sehen, daß in vielen Fällen gerade solche Füllstoffe, die schleiftechnisch sehr interessant sind, d. h. hochwirksam sind, bei der Herstellung der Scheibe Schwierigkeiten mit sich bringen. Beispiele dafür sind z. B. hygroskopische Füllstoffe. Weiters ist zu bedenken, daß schleifaktive Füllstoffe nicht in unbegrenztem Maß in die Schleifscheibe bzw. in den Schleifkörper eingebracht werden können, da selbstverständlich auch der Schleifkornanteil und der Bindemittelanteil in der Schleifscheibe einen gewissen Mindestanteil haben muß.

Abgesehen von der Zugabe von schleifaktiven und z. B. kühlenden Stoffen, ist es bekannt, Schleifscheiben während des Schleifvorganges durch flüssige Kühlmittel, z. B. Öl-Wasser-Emulsionen zu kühlen. Beispielsweise wird beim Schleifen mit höheren Umfangsgeschwindigkeiten das flüssige Kühlmittel mittels Düser, auf die Schleifscheibe ausgespritzt.

Aus der US-A 19 70 545 und der US-A 39 90 192 sind feste Körper bekannt, die schleifaktive Füllstoffe enthalten, und während des Schleifvorganges an die Schleiffläche des Schleifkörpers angedrückt werden.

**AUFGABE DER ERFINDUNG**

Ausgehend vom Stand der Technik gemäß US-A 39 90 192 ist es Aufgabe der Erfindung, ein Verfahren zu schaffen, das den Einsatz derartiger fester Körper mit zusätzlichen schleifaktiven Füllstoffen insofern verbessert, däß es zu einer besseren Nutzung des Füllstoffes und zu einer geringeren Belastung des Arbeitsplatzes kommt. Das erfindungsgemäße Verfahren soll insobesondere beim Trennschleifen vorteilhaft anwendbar sein.

Dies wird erfindungsgemäß dadurch erreicht, daß zum Trennen von Werkstück en der feste Körper während des Trennschleifvorganges unmittelbar am Werkstück anliegt, wobei er während des Schleifvorganges vom Schleifkörper durchschnitten wird.

Beim erfindungsgemäßen Verfahren kann der Füllstoff des festen Körpers während des Schneidvorganges nicht tangential weggeschleudert werden, und wird daher optimal genützt. Versuche haben gezeigt, daß außerdem die Staubentwicklung im Vergleich zu herkömmlichen Schleifverfahren mit festen Füllstoffkörpern wesentlich herabgesetzt wurde.

Eine weitere Aufgabe der Erfindung ist es, eine Vorrichtung zur Durchführung dieses Verfahrens zu schaffen.

Dies wird erfindungsgemäß erreicht durch ein Magazin für den vorzugsweise als Platte ausgebildeten festen Körper, der von schleifaktiven Füllstoffen gebildet wird oder diese enthält und einem Taktvorschubgerät, das den festen Körper taktweise an die Trennstelle heranbringt.

Die Menge des schleifaktiven Stoffes kann beispielsweise durch die Dicke der Platte vorbestimmt sein.

Nachfolgend werden Ausführungsbeispiele der Erfindung an Hand der Figuren der Zerichnung beschrieben.

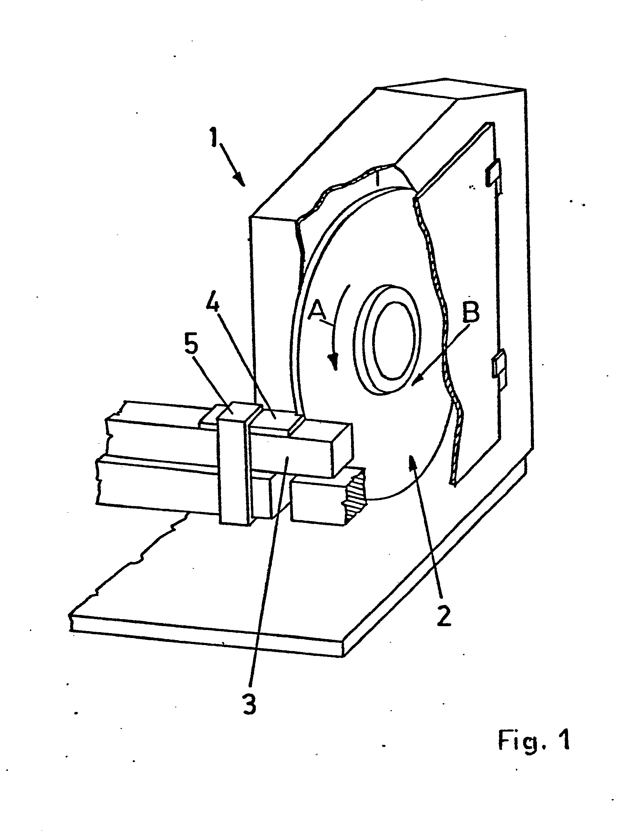

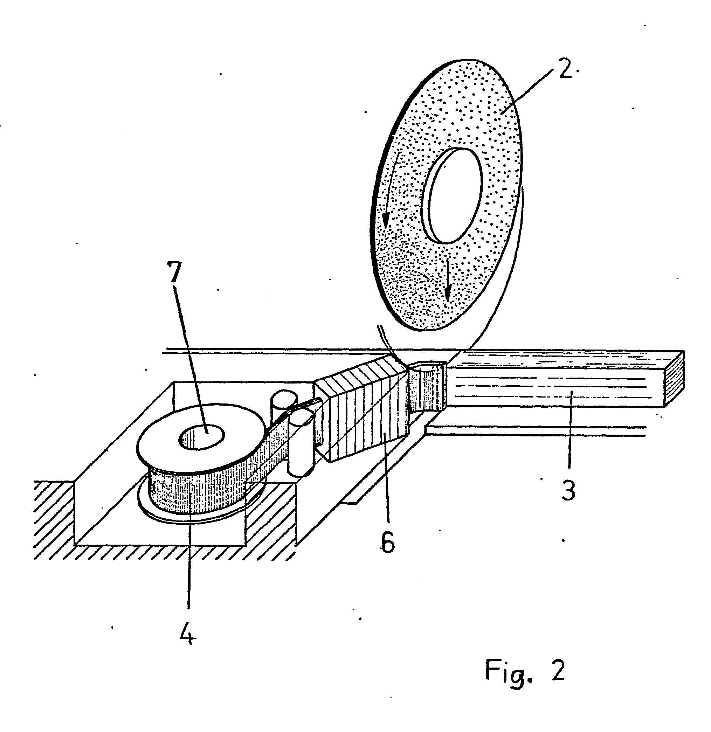

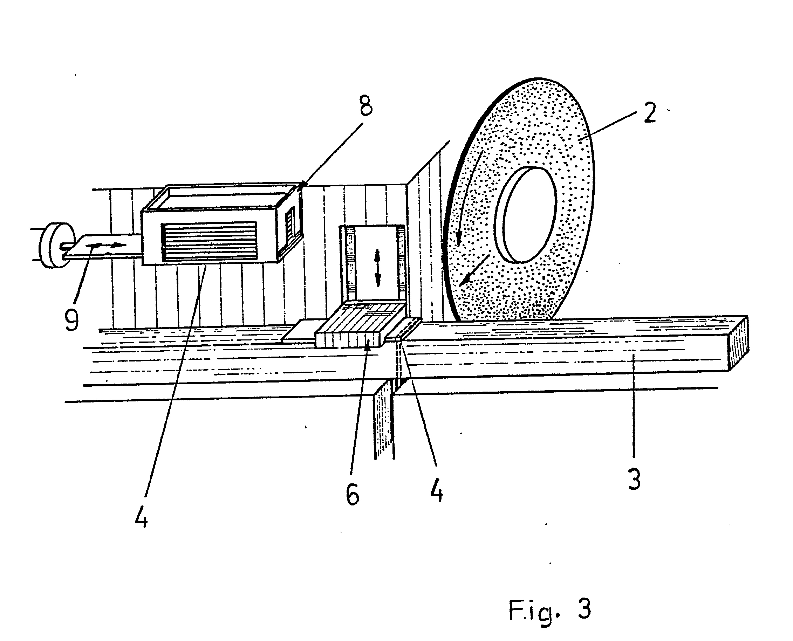

Die Fig. 1 zeigt schematisch eine Anordnung, wie sie gemäß dem erfindungsgemäßen Verfahren Anwendung findet und die Fig. 2 und 3 zeigen schematisch Vorrichtungen zur Durchführung des Verfahrens.

In den Figuren bezeichnet 1 eine Trennschleifmaschine, auf die eine trennscheibe 2 aufgespannt ist. Mit 3 ist das zu schneidende Werkstück bezeichnet. 4 zeigt den erfindungsgemäßen festen Körper, der als Platte ausgebildet ist und schleifaktive, beispielsweise kühlende Stoffe enthält. Der feste Körper, bzw. die Platte 4, ist mittels einer Zustellvorrichtung 5,6 am Werkstück 3 gehalten.

Die Pfeile A und B bezeichnen die Drehrichtung der Trennscheibe 2, bzw. die Vorschubrichtung.

Das Werkstück 3 wird mit angelegter Platte 4 in herkömmlicher Art und Weise mittels der Trennscheibe 2 getrennt, wobei gleichzeitig die Platte 4 durchschnitten wird und so schleifaktive, z. B. kühlende Stoffe unmittelbar an die Schnittstelle herangebracht werden.

In den Fig. 2 und 3 ist die Zustellvorrichtung 6 als Taktvorschubgerät ausgebildet. In der Fig. 2 ist das Magazin eine Haspel 7, auf der der feste Körper 4 als Band aufgewickelt ist. Das Taktvorschubgerät zieht das Band des festen Körpers 4 von der Haspel 7 im spitzen Winkel zum Werkstück 3. Durch die Anordnung des Taktvorschubgerätes wird das Band des festen Körpers 4 im unmittelbaren Trennbereich parallel zum Werkstück 3 abgelenkt.

Im Ausführungsbeispiel nach der Fig. 3 sind die Kühlplatten des festen Körpers 4 in einem Stapelmagazin 8 bevorratet. Das Taktvorschubgerät 6 ist auch vertikal verstellbar und steuert den Vorschub der Kühlplatte. Nach Verbrauch einer Kühlplatte, also eines festen Körpers 4 fährt das Taktvorschubgerät 6 zum Stapelmagazin 8 und nimmt eine vom Schieber 9 herausgedrückte Kühlplatte auf. Das Taktvorschubgerät arbeitet mit zwei Zangen, wobei eine Zange zusätzlich zum Klemmen des festen Körpers 4 bzw. der Kühlplatten auch die Hubarbeit ausführt.

Nachfolgend die Rezeptur fester Körper zur Durchführung des erfindungsgemäßen Verfahrens sowie die Rezeptur von Schleifscheiben, die gemäß dem erfindungsgemäßen Verfahren Anwendung finden können:

**Fester Körper:**

| | | |
|---|---|---|
| 1. Beispiel | Pyrith | 60 Vol % |
| | Novolak (Binder) | 40 Vol % |
| | Kryolith | 20 Vol % |
| 2. Beispiel | Pyrith | 10 Vol % |
| | Kaliumchlorid | 30 Vol % |
| | Novolak (Binder) | 40 Vol % |

**Schleifscheibe:**

| | |
|---|---|
| Normal Korund | 45 Vol % |
| Resol, Novolak | 25 Vol % |
| Zinksulfid | 10 Vol % |
| Glasfasergewebe | 5 Vol % |
| Poren | 15 Vol % |

**Trennschleifergebnisse:**

| Scheibe | Schleifverhältnis | Verfärbung |
|---|---|---|
| 100 % Füllstoff in der Scheibe | 2,8 | blanker Schnitt |
| 100 % Füllstoff als Kühlplatte verwendet | 3,9 | blanker Schnitt |

| Scheibe | Schleifverhältnis | Verfärbung |
|---|---|---|
| ohne "Kühlplatte" | 2,6 | Anlauffarben über gesamte Trennfläche |
| mit "Kühlplatte" | 3,0 | blanker Schnitt |

**Patentansprüche:**

1. Verfahren zum Bearbeiten von Werkstücken (3), wobei eine Relativbewegung zwischen dem Werkstück und einem Schleifkörper (2), bestehend aus Schleifkorn, Bindemittel und fallweise Füllstoffen, stattfindet und wobei während des Bearbeitens ein aus schleifaktiven Stoffen gebildeter oder schleifaktiven Füllstoff enthaltender, bei Temperaturen zwischen 1°C und 200°C fester Körper (14) an den Schleifkörper im Bereich seiner Arbeitsflächen herangebracht wird, dadurch gekennzeichnet, daß zum Trennen von Werkstücken der feste Körper während des Trennschleifvorganges unmittelbar am Werkstück anliegt, wobei er während des Schleifvorganges vom Schleifkörper durchschnitten wird.

2. Verfahren nach Anspruch 1, dadurch gekennzeichnet, daß die Decke das festen Körpers gleich der Breite des Schleifkörpers ist.

3. Vorrichtung zur Durchführung des Verfahrens nach Anspruch 1, mit einer Trennscheibe und einer Werkstückauflage, gekennzeichnet durch ein Magazin (7,8) für den vorzugsweise als Platte ausgebildeten festen Körper (4), der von schleifaktiven Füllstoffen gebildet wird oder diese enthält und einem Taktvorschubgerät (6),

das den festen Körper (4) taktweise an die Trennstelle heranbringt.

4. Vorrichtung nach Anspruch 3, dadurch gekennzeichnet, daß das Magazin (7,8) eine Haspel (7) ist, auf der der als durchgehendes Band ausgebildete feste Körper (4) aufgewickelt ist.

5. Vorrichtung nach Anspruch 3, dadurch gekennzeichnet, daß das Magazin (7) als Plattenmagazin (8) für mehrere aufeinanderliegende Füllstoffplatten (4) ausgeführt ist.

6. Vorrichtung nach Anspruch 3 und 5, dadurch gekennzeichnet, daß das Taktvorschubgerät (6) vertikal verstellbar ist.

7. Vorrichtung nach Anspruch 5, gekennzeichnet durch einen Schieber (9), der die Fullstoffplatten (4) einzeln zum Taktvorschubgerät drückt.

8. Vorrichtung nach einem der Ansprüche 3 und 5 bis 7, dadurch gekennzeichnet, daß das Taktvorschubgerät (6) zwei Zangen für die Füllstoffplatten (4) aufweist, von denen eine zusätzlich zum Klemmen auch die Hubarbeit ausführt.

## Claims:

1. A method for treating workpieces (3), a relative movement taking place between the workpiece and an abrasive body (2) comprising abrasive grain, binders and fillers in some cases, and during the treatment a body (4), which is solid at temperatures between 1°C and 200°C and is formed by abrasive-active substances or contains abrasive-active fillers, is fed to the abrasive body in the region of its working faces, characterized in that for severing workpieces to the solid body is in direct contact with the workpiece, the body being cut through by the abrasive body during the grinding process.

2. Method according to claim 1, characterized in that the thickness of the solid body is equal to the breadth of the abrasive body.

3. Device for implementing the method according to claim 1, comprising a severing disk and a workpiece support, characterized by a magazine (7, 8) for the solid body (4), which has preferably the shape of a plate and is formed by abrasive-active fillers or contains the same, and by forwarding means (6) which feed the solid body (4) intermittently to the cutting zone.

4. Device according to claim 3, characterized in that the magazine (7, 8) is a reel (7) on which the solid body (4), which is a continuous band, is wound.

5. Device according to claim 3, characterized in that the magazine (7) is a plate magazine (8) for a number of superjacent filler plates (4).

6. Device according to claims 3 and 5, characterized in that the forwarding means (6) are vertically adjustable.

7. Device according to claim 5, characterized by a slide (9) which presses the filler plates (4) individually to the forwarding means.

8. Device according to one of claims 3 and 5 to 7, characterized in that the forwarding means (6) has two tongs for the filler plates (4), one of them effecting the lifting operation in addition to the clamping.

## Revendications

1. Procédé pour usiner des pièces (3), dans lequel il se produit un mouvement relatif entre la pièce et un corps abrasif (2) composé de grain abrasif, de liant et éventuellement de charges, et dans lequel, pendant le travail, on achemine au corps abrasif, dans la région de ses surfaces de travail, un corps solide (4) formé de matières adjuvantes d'abrasion ou contenant une charge adjuvante d'abrasion, qui est solide aux températures comprises entre 1°C et 200°C, caractérisé en ce que, pour le tronçonnage de pièces, le corps solide est directement en contact avec la pièce pendant l'opération de tronçonnage par abrasion, ce corps étant alors coupé par le corps abrasif pendant l'opération d'usinage par abrasion.

2. Procédé selon la revendication 1, caractérisé en ce que l'épaisseur du corps solide est égale à la largeur du corps abrasif.

3. Dispositif pour la mise en oeuvre du procédé selon la revendication 1, comprenant un disque de tronçonnage et un appui de pièce, caractérisé par un magasin (7, 8) de réserve du corps solide (4), de préférence présenté sous la forme d'une plaque, qui est formé de charges adjuvantes d'abrasion ou contient de telles charges, et un appareil d'avance intermittente (6) qui achemine le corps solide (4) au point de coupe par intermittence.

4. Dispositif selon la revendication 3, caractérisé en ce que le magasin (7, 8) est un dérouleur (7) sur lequel est enroulé le corps solide (4) réalisé sous la forme d'une bande continue.

5. Dispositif selon la revendication 3, caractérisé en ce que le magasin (7) est réalisé sous la forme d'un magasin à plaques (8) destiné à recevoir plusieurs plaques de charge (4) superposées.

6. Dispositif selon les revendications 3 et 5, caractérisé en ce que l'appareil d'avance intermittente (6) est mobile dans la direction verticale.

7. Dispositif selon la revendication 5, caractérisé par un poussoir (9) qui achemine les plaques de charge (4) individuellement à l'appareil d'avance intermittente.

8. Dispositif selon l'une des revendications 3 et 5 à 7, caractérisé en ce que l'appareil d'avance intermittente (6) présente deux pinces pour les plaques (4) de charge, dont l'une exécute également le travail d'avance en supplément du serrage.

Fig. 1

Fig. 2

Fig. 3